# EUROPEAN PATENT SPECIFICATION

(11) **EP 1 774 884 B1**
(45) Date of publication and mention of the grant of the patent: **03.03.2010**
(21) Application number: 06021449.1
(22) Date of filing: 12.10.2006
(51) Int. Cl.: A47J 31/54, F24H 1/10

(54) **Hot water and/or steam generator**
Heisswasser und/oder Dampferzeuger
Générateur d'eau chaude et/ou de vapeur

(30) Priority: 14.10.2005 IT MI20051939
(43) Date of publication of application: 18.04.2007
(73) Proprietor: Rossi Corporation S.r.l., Tortona (AL) (IT); ROTFIL S.r.l., 10044 Pianezza TO (IT)
(72) Inventor: Rossi, Giampiero, 27055 Rivanazzano (Pavia) (IT); Ravaglia, Mario, 10128 Torino (IT)
(74) Representative: Rapisardi, Mariacristina

(56) References cited:
- EP-A- 0 325 678
- EP-A2- 0 044 040
- WO-A-00/11914
- WO-A-2005/072587
- FR-A1- 2 331 232
- US-A- 2 680 802

## Description

The present invention relates to a hot water and/or steam generator, usable in household or industrial appliances that for their operation need the production of hot water, in particular bit not exclusively automatic or semiautomatic coffeemakers and the like. Boilers for coffeemakers have long been present on the market, consisting of a high heat conductivity body, exhibiting a housing, wherein there is special electrically powered heating means, and an inner heating chamber wherein water is warmed. The transmission of the thermal energy from the heating means to the water into the heating chamber takes place by conduction through the mass of the boiler body, whose thermal inertia nevertheless affects the time required to bring the water to the desired temperature, increasing it. Moreover, such boilers exhibit a heating chamber intended for containing an amount of water that sometimes is higher than that required for the operating cycle of the appliance.

The excess water can be disposed of or can stagnate for a certain period into the heating chamber to be reused in the next cycle, this of course implying obvious hygiene problems.

In any case, the energy consumption of such boilers is not optimised since the excess amount of water is warmed to no use.

Such boilers generally work by withholding the water inside the heating chamber and warming up, it pressurises.

In order to contain the water and/or steam pressure generated into the heating chamber, this must exhibit a suitable mechanical resistance and special sealing means, which sometimes restrict or complicate the design choices for its structure.

Finally, such boilers could exhibit poor flexibility of adaptation when they are required to change the outlet temperature of the water and/or steam to meet different operating variables of the appliance they are installed on.

WO 2005/072587, US-A-2680802, WO 00/11914, EP 0325678, EP 0044040 and FR 2331232 disclose a generator according to the preamble of claim 1.

The technical task of the present invention therefore is to provide a hot water and/or steam generator which should allow eliminating the above technical disadvantages of the prior art.

Within this technical task, an object of the invention is to provide a hot water and/or steam (ndt: il termine l' ho aggiunto io, ma nel source manca) generator which should exhibit a high flexibility of use, optimise the energy consumption, exhibit a simple structure, be inexpensive, efficient, maintain hygienic operating conditions, and minimise ordinary and extraordinary maintenance requirements.

The technical task as well as these and other objects, according to the present invention are achieved by providing a hot water and/or steam generator comprising electrically powered heating means and a chamber for producing said hot water and/or steam, characterised in that said chamber is defined by a hollow space, delimited by said heating means in cooperation with a demarcation element, through which water flows while is heated.

Further features of the present invention, moreover, are defined in the following claims.

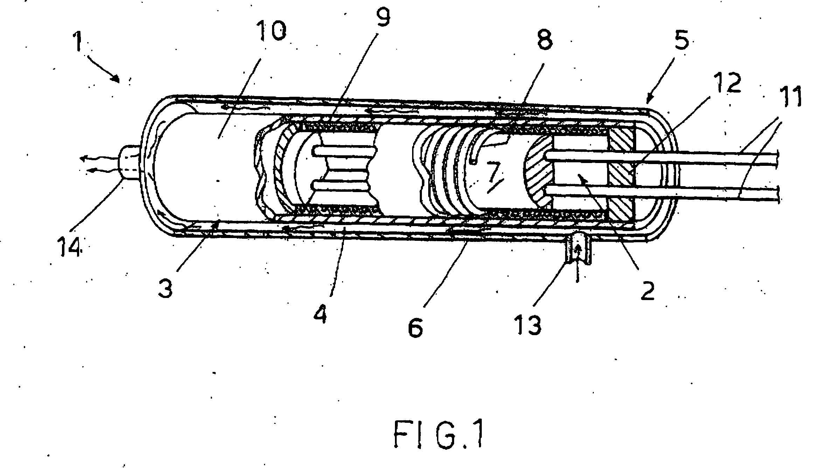

Further features and advantages of the invention will appear more clearly from the description of a preferred but non-exclusive embodiment of the hot water and/or steam generator according to the finding, illustrated by way of a non-limiting example in the annexed drawing, wherein: figure 1 shows a side elevation and axially partly section view of a hot water and/or steam generator according to a preferred embodiment of the invention. With reference to the above figures, there is shown a hot water and/or steam generator, globally indicated with reference numeral 1, of the type comprising electrically powered heating means 2 and a chamber 3 for producing hot water and/or steam.

A particularly advantageous aspect of generator 1 is that chamber 3 is defined by a hollow space 4, delimited by the heating means 2 in cooperation with a demarcation element 5, through which water flows while is heated.

By way of a non-limiting example, reference shall be made to a generator 1 adapted for the production of hot water and/or steam in an automatic or semiautomatic coffeemaker, but clearly its use can be extended to any appliance that requires the production of hot water and/or steam for its operation, for example an iron or other things.

In the illustrated solution, the demarcation element 5 exhibits an inner cavity wherein there is arranged the heating means 3, and in particular the demarcation element 5 comprises a tubular enclosure 6 whereas the heating means 3 comprises a cartridge heater arranged coaxially inside the tubular enclosure 6 so that hollow space 4 is defined between the outer side surface of the cartridge heater and the inner side surface of the tubular enclosure 6.

The cartridge heater exhibits a cylindrical central core 7 for supporting at least one thread-like resistor 8 wound as a spiral about the side surface of core 7 and incorporated in a tubular matrix 9 on which a tubular skirt 10 is fitted, whose outer side surface in particular delimits hollow space 4 with the inner side surface of enclosure 6. Preferably, the central core 7 is of magnesium oxide; resistor 8 is of nickel chromium 80/20, ideal for its resistance properties at high working temperatures, self-protection from oxidation, total lack of magnetism and low coefficient of resistivity variation as temperature varies; matrix 9 is of magnesium oxide whose grain structure ensures a high dielectric insulation and excellent transmission of the heat, generated by resistor 8, to skirt 10; skirt 10 is of a metal exhibiting excellent thermal conductivity, high resistance to oxidation, at high temperatures, high resistance to chemical corrosion, structural stability even after several heating and cooling cycles.

It should be noted that the arrangement of resistor 8 away from the cartridge heater axis and separate from hollow space 4 only by skirt 10, allows maintaining the working temperature of resistor 8 itself reasonably low for having the desired water temperature, thus limiting the forming of scale on the cartridge heater, a phenomenon that as known increases considerably as the temperature increases and that causes a loss of efficiency of the cartridge heater itself. Preferably, the spatial distribution of the coils of resistor 8 is variable along the axial development of the heater of core 7, so that locally, the cartridge heater may provide efficient working temperatures. The structure of the cartridge heater is completed by the electrical terminals 11 for powering resistor 8, arranged through a cap 12 for closing an open base of skirt 10, the other base of skirt 10 being on the other hand closed. The cartridge heater may also exhibit at least one temperature sensor, for example a thermocouple, and a gas sensor, connected to the control unit (not shown) of device 1.

The tubular enclosure 6 preferably exhibits a radial inlet 13 for the water, obtained through the side wall thereof, and an axial outlet 14 for the water, obtained through a closed base thereof, the other base thereof on the other hand being openable through a cap (not shown) for introducing and removing the cartridge heater.

Hollow space 4 may be free, as shown, so as to convey the water from inlet 13 to outlet 14 along a conveying path that develops substantially parallel to the axis of the cartridge heater. In a different embodiment according to the present invention, hollow space 4 may exhibit a helical conveyor therein, adapted for conveying the water from inlet 13 to outlet 14 along a conveying path that develops helically about the axis of the cartridge heater, for increasing the thermal exchange time between the water and the cartridge heater.

In a different preferred embodiment (not shown) according to the present invention, the heating means comprises a tubular enclosure on which a resistive circuit is printed, whereas the demarcation element is a mandrel arranged internally and coaxially to the tubular enclosure, the hollow space being defined between the inner side surface of the tubular enclosure and the outer side surface of the mandrel.

The operation of generator 1 according to the invention clearly appears from what described and illustrated, and in particular with reference to its use in a coffeemaker, it substantially is as follows.

When the user requires an amount of coffee, the control unit receives the order and controls the dispensing through generator 1 of the quantity of water necessary to produce the required amount. The produced hot water is then used for the infusion through a of coffee powder (manca qualcosa,. forse cialda, pod in inglese, ndt) suitably arranged in an infusion unit of the coffeemaker. Since the thermal exchange surface between the cartridge heater and the water into hollow space 4, consisting of the outer side surface of skirt 10, is very high in relation to the water flow passing through hollow space 4, and since resistor 8 is arranged in the proximity of the thermal exchange surface, the thermal exchange time to bring the water to the desired temperature is very short and the desired water temperature canthus be achieved not withholding the water into hollow space 4 but feeding a continuous flow of water through hollow space 4.

In the practice, the water enters into the generator through inlet 13, flows through hollow space 4 where it is subject to the thermal exchange, and comes out of the generator through outlet 14.

Since it is not necessary to hold the water to be heated into the hollow space, it is not even necessary to design generator 1 for withstanding high pressures and it is not necessary to provide for complex pressure sealing systems.

The smallness of the volume of hollow space 4 and of the water flow passing therein allows eliminating water waste or stagnation into generator 1.

The energy consumption is reduced and the efficiency of the generator remains at optimal values since resistor 8 can operate at reasonably low temperatures.

Controlling the water temperature at the outlet from generator 1 may be important since the temperature required for the water may vary on the basis of several factors, for example based on the grain size of the coffee powder used to make the infusion.

To this end, the control unit may control resistor 8, also according to the signals it receives from any temperature sensors and to gases into the cartridge heater, interrupting and restoring the electrical supply to resistor 8 for suitable times. According to the requirements, therefore, the control unit may vary the working temperature pattern for resistor 8 from one operating cycle to the other of the coffeemaker, or also during a same operating cycle. Moreover, the control unit could synchronise the start of the water feeding to generator 1 relative to the moment in which resistor 8 rises to a predetermined temperature, for example to the working temperature.

Several changes and variations can be made to the hot water and/or steam generator thus conceived, all falling within the scope of the inventive concept; moreover, I all details can be replaced with technically equivalent elements.

In the practice, the materials used as well as the sizes, can be whatever, according to the technical requirements and to the prior art.

## Claims

1. Hot water and/or steam generator (1) comprising electrically powered heating means (2) and a chamber (3) for producing said hot water and/or steam, said chamber being one defined by a hollow space (4), delimited by said heating means (2) in cooperation with a demarcation element (5), through which water flows white is heated, said demarcation element (5) exhibiting an inner cavity wherein said heating means (2) are arranged, said demarcation element (5) comprising a tubular enclosure (6) and said heating means (2) comprising a cartridge heater arranged coaxially inside said tubular enclosure (6), said hollow space (4) being defined between the outer side surface of said cartridge heater and the inner side surface of said enclosure (6), **characterised in that** said cartridge heater exhibits a cylindrical central core (7) for supporting at least one thread-like resistor (8) wound as a spiral about the side surface of said core (7) and incorporated in a tubular matrix (9) exhibiting high properties of dielectric insulation and heat transmission, and a tubular skirt (10) fitted on said tubular matrix (9) and exhibiting high properties of thermal conduction and of resistance to thermal stress, said resistor (8) being arranged away from said cartridge heater axis and separated from said hollow space (4) only by said skirt (10) to maintain the working temperature of said resistor (8) reasonably low for having the desired water temperature.

2. Hot water and/or steam generator according to claim 1, **characterised in that** said tabular enclosure (6) exhibits a radial inlet (13) for said water, obtained through the side wall thereof, and an axial outlet (14) for said water and/or steam, obtained through a base thereof.

3. Hot water and/or steam generator according to one or more of the previous claims, **characterised in that** the spatial distribution of the coils of said resistor (8) is variable along the axial development of said core.

4. Hot water and/or steam generator according to one or more of the previous claims, **characterised in that** said core (7) is of magnesium oxide.

5. Hot water and/or steam generator according to one or more of the previous claims, **characterised in that** said skirt (10) is of metal.

6. Hot water and/or steam generator according to one or more of the previous claims, **characterised in that** said matrix (9) is of magnesium oxide.

7. Hot water and/or steam generator according to claim 1, **characterised in that** said heating means (2) comprises a tubular enclosure on which a resistive circuit is printed, whereas said demarcation element is a mandrel arranged internally and coaxially to said tubular enclosure, said hollow space being defined between the inner side surface of said tubular enclosure and the outer side surface of said mandrel.

8. Hot water and/or steam generator according to one or more of the previous claims, **characterised in that** said hollow space (4) is free so as to convey said water from said inlet (13) to said outlet (14) along a conveying path that develops parallel to the axis of said hollow space (4).

9. Hot water and/or steam generator according to one or more of the previous claims, **characterised in that** said hollow space (4) internally exhibits a helical conveyor adapted for conveying said water from said inlet (13) to said outlet (14) along a conveying path that develops helically about the axis of said hollow space.

10. A coffeemaker **characterised in that** it exhibits a hot water and/or steam generator (1) according to one or more of the previous claims.

## Patentansprüche

1. Heißwasser- und/oder Dampfgenerator (1), der elektrisch betriebene Heizmittel (2) und eine Kammer (3) zur Produktion des besagten Heißwassers und/oder Dampfes umfasst, wobei besagte Kammer durch einen Hohlraum (4) definiert wird, der von besagten Heizmitteln (2) zusammen mit einem Demarkationselement (5) begrenzt wird, durch welches während des Anheizens Wasser fließt; besagtes Demarkationselement (5) weist eine innere Aushöhlung auf, in der besagte Heizmittel (2) angeordnet sind, wobei besagtes Demarkationselement (5) einen schlauchförmigen Einschluss (6) umfasst und besagte Heizmittel 2) eine Heizpatrone umfassen, die koaxial im Inneren des besagten schlauchförmigen Einschlusses (6) angeordnet ist, wobei besagter Hohlraum (4) zwischen der Außenfläche der besagten Heizpatrone und der Innenfläche des besagten Einschlusses (6) begrenzt ist, **gekennzeichnet dadurch, dass** besagte Heizpatrone einen zylinderförmigen zentralen Kern (7) aufweist zum Abstützen von mindestens einem fadenförmigen Widerstand (8), der wie eine Spirale um die Seitenfläche des besagten Kerns (7) gewickelt und in eine schlauchförmige Matrix (9) eingeschlossen ist, die gute Eigenschaften an dieletrischer Isolierung und Heizübertragung zeigt, und eine schlauchförmige Einfassung (10), die auf besagter schlauchförmiger Matrix (9) aufgesetzt ist und gute Eigenschaften an Wärmeleitung und an Widerstand gegen Wärmebelastung zeigt, wobei besagter Widerstand (8) fern von besagter Heizpatronenachse angeordnet und von besagtem Hohlraum (4) nur durch besagte Einfassung (10) getrennt ist, um die Arbeitstemperatur des besagten Widerstandes (8) möglichst niedrig zu halten, damit die gewünschte Wassertemperatur erreicht wird.

2. Heißwasser- und/oder Dampfgenerator nach Anspruch 1, **gekennzeichnet dadurch, dass** besagter schlauchförmiger Einschluss eine radiale Eintrittsöffnung (13) für besagtes Wasser aufweist, die durch die Seitenwand desselben realisiert wird, und eine axiale Austrittsöffnung (14) für besagtes Wasser und/oder Dampf, die durch ein Ende desselben realisiert wird.

3. Heißwasser- und/oder Dampfgenerator nach einem oder mehreren der vorherigen Ansprüche, **gekennzeichnet dadurch, dass** die Raumverteilung der Spulen des besagten Widerstandes (8) entlang der Axialentwicklung des besagten Kerns variiert.

4. Heißwasser- und/oder Dampfgenerator nach einem oder mehreren der vorherigen Ansprüche, **gekennzeichnet dadurch, dass** besagter Kern (7) aus Magnesiumoxyd besteht.

5. Heißwasser- und/oder Dampfgenerator nach einem oder mehreren der vorherigen Ansprüche, **gekennzeichnet dadurch, dass** besagte Einfassung (10) aus Metall ist.

6. Heißwasser- und/oder Dampfgenerator nach einem oder mehreren der vorherigen Ansprüche, **gekennzeichnet dadurch, dass** besagte Matrix (9) aus Magnesiumoxyd besteht.

7. Heißwasser- und/oder Dampfgenerator nach Anspruch 1, **gekennzeichnet dadurch, dass** besagte Heizmittel (2) einen schlauchförmigen Einschluss umfassen, auf dem ein resistiver Kreislauf gedruckt ist, während besagtes Demarkationselement eine innen und koaxial zu besagtem Einschluss angeordnete Spindel ist, wobei besagter Hohlraum zwischen der Innenfläche des besagten schlauchförmigen Einschlusses und der Außenfläche der besagten Spindel begrenzt ist.

8. Heißwasser- und/oder Dampfgenerator nach einem oder mehreren der vorherigen Ansprüche, **gekennzeichnet dadurch, dass** besagter Hohlraum (4) frei ist, so dass er besagtes Wasser von besagter Eintrittsöffnung (13) zu besagter Austrittsöffnung (14) befördern kann längs eines Beförderungswegs, der parallel zur Achse des besagten Hohlraums (4) verläuft.

9. Heißwasser- und/oder Dampfgenerator nach einem oder mehreren der vorherigen Ansprüche, **gekennzeichnet dadurch, dass** besagter Hohlraum (4) innen eine spiralförmige Fördervorrichtung aufweist, geeignet, um besagtes Wasser von besagter Eintrittsöffnung (13) zu besagter Austrittsöffnung (14) zu befördern längs eines Beförderungsweges, der spiralförmig um die Achse des besagten Hohlraums verläuft.

10. Eine Kaffeemaschine, **gekennzeichnet dadurch, dass** sie einen Heißwasser- und/oder Dampfgenerator (1) nach einem oder mehreren der vorherigen Ansprüche aufweist.

## Revendications

1. Générateur d'eau chaude et/ou de vapeur (1) comprenant un dispositif de chauffage (2) à alimentation électrique et une chambre (3) pour la production de ladite eau chaude et/ou vapeur, ladite chambre étant définie par un espace creux (4) délimité par ledit dispositif de chauffage (2) en coopération avec un élément de démarcation (5) à travers lequel s'écoule l'eau lorsqu'elle est chauffée, ledit élément de démarcation (5) présentant une cavité interne où ledit dispositif de chauffage (2) est placé, ledit élément de démarcation (5) comprenant une enveloppe tubulaire (6) et ledit dispositif de chauffage (2) comprenant une cartouche chauffante placée de manière coaxiale à l'intérieur de ladite enveloppe tubulaire (6), ledit espace creux (4) étant défini entre la surface latérale externe de ladite cartouche chauffante et la surface latérale interne de ladite enveloppe (6), **caractérisé par le fait que** ladite cartouche chauffante présente un noyau central cylindrique (7) pour le support d'au moins une résistance filiforme (8) enroulée en spirale autour de la surface latérale dudit noyau (7) et incorporée dans une matrice tubulaire (9) présentant des propriétés élevées d'isolation diélectrique et de transmission de chaleur, et une jupe tubulaire (10) montée sur ladite matrice tubulaire (9) et présentant des propriétés élevées de conduction thermique et de résistance à la contrainte thermique, ladite résistance (8) étant placée loin de l'axe de ladite cartouche chauffante et séparée dudit espace creux (4) seulement par ladite jupe (10) pour maintenir la température de fonctionnement de ladite résistance (8) raisonnablement basse pour obtenir la température de l'eau désirée.

2. Générateur d'eau chaude et/ou de vapeur selon la revendication 1, **caractérisé par le fait que** ladite enveloppe tubulaire (6) présente une entrée radiale (13) pour ladite eau, pratiquée à travers sa paroi latérale, et une sortie axiale (14) pour ladite eau et/ou vapeur, pratiquée à travers sa base.

3. Générateur d'eau chaude et/ou de vapeur selon une ou plusieurs des revendications précédentes, **caractérisé par le fait que** la distribution spatiale des bobines de ladite résistance (8) est variable le long du développement axial dudit noyau.

4. Générateur d'eau chaude et/ou de vapeur selon une ou plusieurs des revendications précédentes, **caractérisé par le fait que** ledit noyau (7) est en oxyde de magnésium.

5. Générateur d'eau chaude et/ou de vapeur selon une ou plusieurs des revendications précédentes, **caractérisé par le fait que** ladite jupe (10) est en métal.

6. Générateur d'eau chaude et/ou de vapeur selon une ou plusieurs des revendications précédentes, **caractérisé par le fait que** ladite matrice (9) est en oxyde de magnésium.

7. Générateur d'eau chaude et/ou de vapeur selon la revendication 1, **caractérisé par le fait que** ledit dispositif de chauffage (2) comprend une enveloppe tubulaire sur laquelle est imprimé un circuit résistif, tandis que ledit élément de démarcation est un mandrin placé à l'intérieur de ladite enveloppe tubulaire, de manière coaxiale, ledit espace creux étant défini entre la surface latérale interne de ladite enveloppe tubulaire et la surface latérale externe dudit mandrin.

8. Générateur d'eau chaude et/ou de vapeur selon une ou plusieurs des revendications précédentes, **caractérisé par le fait que** ledit espace creux (4) est libre de sorte à convoyer ladite eau entre ladite entrée (13) et ladite sortie (14) le long d'une voie de transport qui se développe parallèlement à l'axe dudit espace creux (4).

9. Générateur d'eau chaude et/ou de vapeur selon une ou plusieurs des revendications précédentes, **caractérisé par le fait que** ledit espace creux (4) présente à l'intérieur un convoyeur en hélice prévu pour le transport de ladite eau entre ladite entrée (13) et ladite sortie (14) le long d'une voie de transport qui se développe en hélice autour de l'axe dudit espace creux.

10. Une machine à café **caractérisée par le fait qu'**elle présente un générateur d'eau chaude et/ou de vapeur (1) selon une ou plusieurs des revendications précédentes.
